# EUROPEAN PATENT SPECIFICATION

(11) **EP 3 218 956 B1**
(45) Date of publication and mention of the grant of the patent: **07.08.2019**
(21) Application number: 15858923.4
(22) Date of filing: 12.11.2015
(51) Int. Cl.: H01M 10/44, H01M 10/054, H01M 10/056, H01M 10/058

(54) **FAST CHARGE APPARATUS FOR A BATTERY**
SCHNELLE LADEVORRICHTUNG FÜR EINE BATTERIE
APPAREIL DE CHARGE RAPIDE POUR UNE BATTERIE

(30) Priority: 12.11.2014 US 201414539448; 28.01.2015 US 201514607530
(43) Date of publication of application: 20.09.2017
(73) Proprietor: Intec Energy Storage Corp., Toronto, Ontario M5C 1Y2 (CA)
(72) Inventor: IAROCHENKO, Alexandre M., Orilla, Ontario L3V 6H7 (CA)
(74) Representative: HGF Limited
(86) International application number: PCT/CA2015/000574
(87) International publication number: WO 2016/074070

(56) References cited:
- CN-A- 103 682 495
- US-A- 6 117 585
- US-A1- 2012 082 905
- US-A1- 2012 105 007
- US-A1- 2012 105 007
- US-A1- 2013 285 597
- US-B2- 8 152 865
- US-B2- 8 288 032

## Description

### CROSS REFERENCE TO RELATED APPLICATION

This application claims benefit of U.S. Utility Application Serial Number 14/607,530, filed January 28, 2015, which is a continuation-in-part of U.S. Utility Patent Application Serial Number 14/539,448, filed November 12, 2014.

### BACKGROUND OF THE INVENTION

### 1. Field of the Invention

This invention relates to a fast charge composite combined with a secondary battery for charging the secondary battery.

### 2. Description of the Prior Art

It is generally known to construct batteries as a stack of layers, with a cathode sandwiched with the membrane and disposed in spaced and parallel relationship with the anode and an electrolyte impregnating the membrane to carry an ion migration through the membrane. An example of such a battery is shown in U.S. Patent Application 2009/0142668.

It is also known to construct a battery as a stack of layers that form a plurality of electrochemical cells which are connected in parallel or in series. An example of such a battery construction is shown in U.S. Patent Application No. 2012/0058380.

Secondary battery cells that use an electrolyte to convey first ions having a positive charge and second ions having a negative charge between anode and cathode electrodes are well known. An example of such a battery is shown in U.S. Patent No. 4,707,423.

Secondary battery cells are typically charged using a traditional charging means of applying a first voltage between the anode and the cathode to cause a first current to flow therebetween. An example of such charging is described in U.S. Patent No. 7,489,107.

It is also well know that a secondary battery may only be recharged with a maximum charging power that is a function of the first voltage between the anode and the cathode times the first current therebetween and applied over a first time interval. There are two main types of damage to battery cells that result from application of power greater than the maximum charging power and cause a substantial loss in capacity. The first main type of damage results from overheating, which causes damage the battery cell through melting and/or the production of gasses (e.g. through boiling the electrolyte). Eventually, overheating damage can cause a short circuit between the electrodes. The second main type of damage is plating, also known as deposition, which occurs with intercalation electrodes that accept ions within a crystalline lattice structure. During normal operation, ions are chemically inserted into the intercalation electrode, where they react with the electrode, trapping the metallic products of the reaction inside of the lattice structure. However, when a power greater than the maximum charging power is applied, ions will react on the surface of an intercalation electrode and cause a metallic layer to form or to be plated on that surface. The formation of that metallic layer is uneven and can create needle-like dendrite structures that extend into the membrane, which can eventually short-circuit the battery cell.

U.S. Patent No. 6,117,585 to Anani et al. discloses a hybrid energy storage device constructed as a stack of layers, with two electrode layers and a first electrolyte forming a battery. A second electrolyte, sandwiched between a third electrode and one of the battery electrodes, forms an electrolytic capacitor. The Anani et al. '585 device requires an external conductor to directly connect the non-adjacent battery electrode to the capacitor electrode.

US 2012/105007 A1 discloses a lithium-ion battery having an auxiliary electrode for the purpose of avoiding the problem of capacity fade.

US 2013/285597 A1 discloses a zinc-air battery employing the air electrode only for discharge, and an auxiliary electrode for charge. This has several advantages, including the possibility of faster charging.

US 2012/082905 A1 discloses an aluminium-ion battery comprising an A1 anode, a MnO₂ Al-intercalation material and an ionic liquid electrolyte.

### SUMMARY OF THE INVENTION

The invention provides a fast charge system as recited in the appended claims. In particular, the invention provides for a fast charge composite with a second electrolyte that includes third ions having a positive charge and fourth ions having a negative charge. The fast charge composite is disposed adjacent to and contacting one of the electrodes of a secondary battery, which is the adjacent electrode, and the remaining electrode of the secondary battery is the remote electrode, which is electrically isolated from the fast charge composite. The fast charge composite is responsive to application of a second electrical power, which is greater than the maximum charging power that can be applied to the secondary battery using the traditional charging means of applying a first voltage between the electrodes of the secondary battery to induce a first current therebetween. The second electrical power is a function of a second voltage between the fast charge composite and the adjacent electrode multiplied by the second current therebetween and applied over a second time interval. The application of the second electrical power causes the third ions and the fourth ions to migrate between the adjacent electrode and the fast charge composite to change the electrochemical potential of the adjacent electrode, which enables the secondary battery to store the predetermined amount of electrical energy in a second time interval that is shorter than the first time interval that it would take using the traditional charging means at or below the maximum charging power. In other words, the battery can be charged to its capacity in a shorter time using the fast charge composite than is possible using traditional charging means.

The invention also provides for a method of constructing such a fast charge composite with a second electrolyte, including: dissolving AlCl3 in ethanol to create a background solution, combining the background solution with glycerol to make a second
electrolyte including third ions having a positive charge and fourth ions having a negative charge, and wetting a separator of electrically insulating material with the second electrolyte.

### ADVANTAGES OF THE INVENTION

The invention in its broadest aspect provides a fast charge composite that allows a secondary battery to store a predetermined amount of electrical energy in less time than is possible using the traditional charging means of applying a first voltage and a first current between the battery leads.

### BRIEF DESCRIPTION OF THE DRAWINGS

Other advantages of the present invention will be readily appreciated, as the same becomes better understood by reference to the following detailed description when considered in connection with the accompanying drawings wherein:

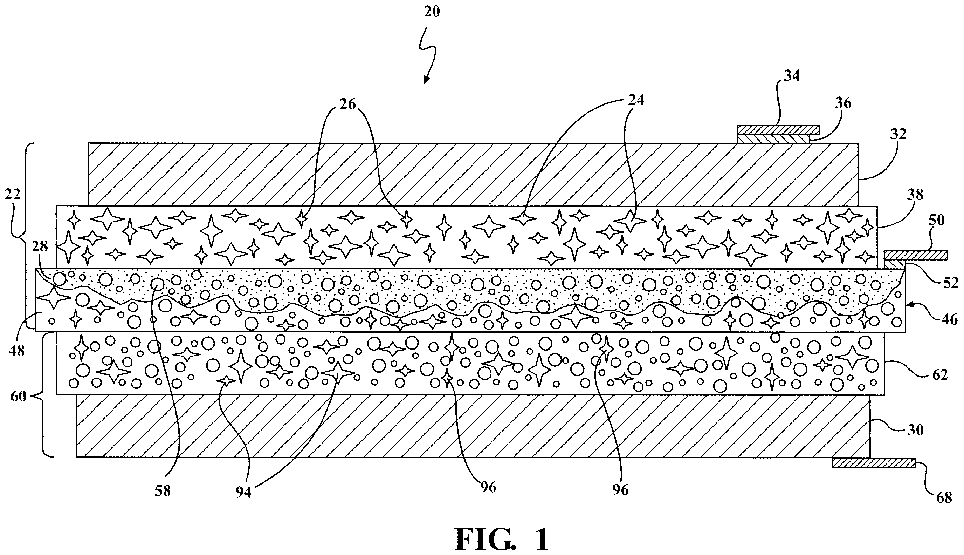

Figure 1 is a schematic cut-away view of a secondary battery with a fast charge composite disposed adjacent a cathode layer of a secondary battery.

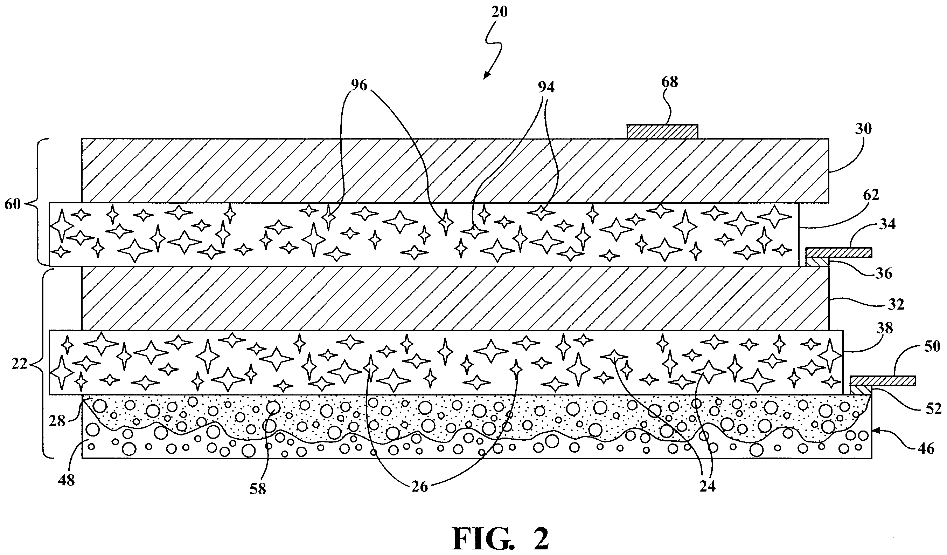

Figure 2 is a schematic cut-away view of a secondary battery with a fast charge composite disposed adjacent an anode layer of a secondary battery.

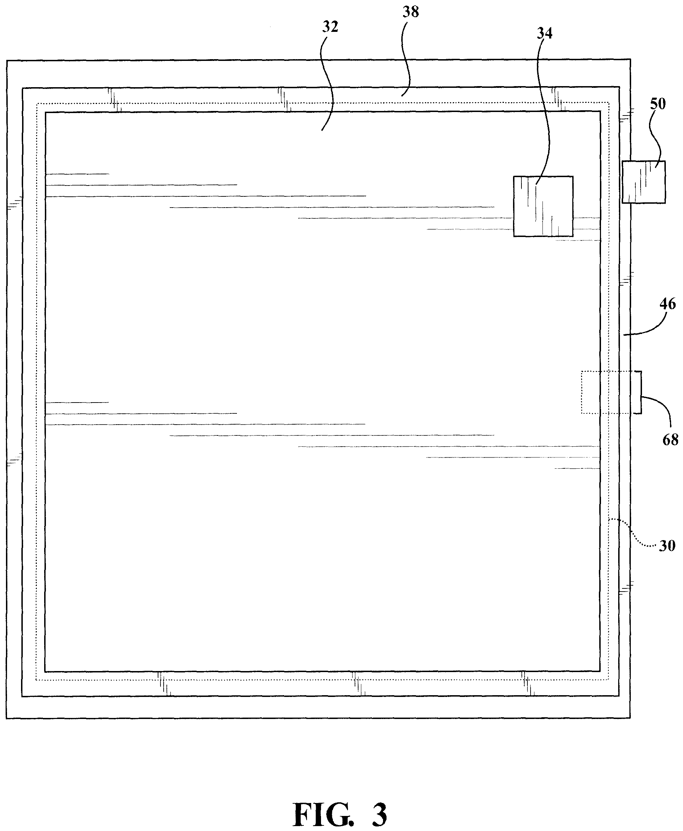

Figure 3 is a cut-away top view of a secondary battery with a fast charge composite disposed below and adjacent a cathode layer of a secondary battery.
Figure 4 is a schematic of secondary battery being charged through traditional means and showing the movement of ions and conventional (positive) current flow.
Figure 5 is a schematic of a fast charge system with a fast charge composite disposed adjacent a cathode layer and showing the movement of ions and conventional (positive) current flow while charging the secondary battery using the fast charge composite and while discharging the secondary battery.

### DESCRIPTION OF THE ENABLING EMBODIMENT

Referring to the Figures, wherein like numerals indicate corresponding parts throughout the several views, a fast charge system **20** including a secondary battery **22** with a capacity to store a predetermined amount of electrical energy is disclosed. The term "secondary battery" refers to an electrochemical energy storage device that is capable of being recharged.

As shown in the figures, the secondary battery **22** includes a pair of electrodes **32, 46** including an anode layer **32** and a cathode layer **46** extending in parallel and spaced relationship to one another.

The anode layer **32** consists of 99.4 to 99.9 wt% of solid Aluminum of 99.95 % purity and 0.1 to 0.6 wt% of Indium with first rectangular borders to define a first length of 1.2 cm, a first width of 1.7 cm, and a first thickness of 0.1 mm. A negative battery lead **34** of electrically conductive material is in electrical contact with the anode layer **32** for conducting electrical current with external circuitry for charging or discharging the secondary battery **22.** The negative battery lead **34** could also serve as a point of connection to another battery cell as part of a multi-cell battery device. The negative battery lead **34** could be a wire, pad, terminal, or any other suitable means of making an electrical connection.

The anode layer **32** is attached in electrical contact with the negative battery lead **34** using an electrically conductive cement **36** that includes particles **92** containing metal. Examples of such cements **36** are *Two Part Conductive Silver Paint* (Part No. 12642-14), sold by Electron Microscopy Sciences and *Solder-It Aluminum Solder Paste,* sold by SOLDER-IT, INC. of Pleasantville, New York.

The cathode layer **46** has a second rectangular border with a second length of 1.4 cm, a second width of 1.9 cm, and a second thickness of 0.1 mm. The cathode layer **46** includes a carrier sheet **48** of cellulose and an electroactive layer **28** integrated within and disposed upon the carrier sheet **48** on the side facing the anode layer **32.** In other words, the electroactive layer **28** coats the surface and extends into the structure of the carrier sheet **48.** The electroactive layer **28** of the cathode layer **46** contains a host lattice **54** that defines a plurality of voids **56** and includes a conjugated system with delocalized *π* electrons. A conjugated system is defined as a system of connected p-orbitals containing delocalized electrons in chemical compounds. More specifically, the conjugation is the overlapping of one p-orbital with another across adjacent single (sigma) bonds. One such compound that has such a conjugated system is graphite. Other compounds such as, but not limited to, polyaniline and polyconjugated linear hydrocarbon polymers also include conjugated systems with overlapping p-orbitals.

A positive battery lead **50** containing thermally expanded graphite is electrically connected to the electroactive layer **28** of the cathode layer **46** for conducting electrical current with external circuitry for charging and/or discharging the secondary battery **22.** An adhesive **52** containing graphite attaches the electroactive layer **28** to the positive battery lead **50** and conducts electrical current therebetween. One such positive battery lead **50** comprises thermally expanded graphite foil **66.** An alternative positive battery lead **50** comprises a rod of graphite with a diameter of 0.1 mm. The positive battery lead **50** could also serve as a point of connection to another battery cell as part of a multi-cell battery device. The positive battery lead **50** could include a wire, pad, terminal, or any other suitable means of making an electrical connection. However, conductors of metal should not be placed in direct contact with the host lattice **54** of the cathode layer **46** because the metal can migrate into the host lattice **54** and interfere with the functionality of the cathode layer **46** in charging and discharging the secondary battery **22.**

A dopant **58** containing Aluminum Alcoholate and Aluminum Glycerate is bonded to the conjugated system of the host lattice **54** to alter the electrochemical properties of the electroactive layer **28** of the cathode layer **46** to increase the rate of the reactions with the first ions **24** and the second ions **26** for charging and discharging the secondary battery **22.** The dopant **58** is also intercalated in the host lattice **54** so that particles **92** of the dopant **58** are embedded in the voids **56** of the host lattice **54.**

A membrane **38** of cellulose having a third thickness **40** of 0.08 mm and defining a plurality of pores **42** is sandwiched between the anode layer **32** and the cathode layer **46** for providing electrical insulation and defining a first voltage **V₁** therebetween. The membrane **38** is an electrical insulator, but is permeable to dissolved ions.

The membrane **38** is wetted with a first electrolyte **44** so the first electrolyte **44** impregnates the pores **42** of the membrane **38.** The first electrolyte **44** includes first ions **24** that contain Aluminum and have a positive charge. The first electrolyte **44** also includes second ions **26** that contain Aluminum and have a negative charge. The first electrolyte **44** is damaged by application of a first voltage **V₁** greater than a predetermined maximum voltage **V_{MAX}.**

An excess ion migration is carried by the first electrolyte **44** through the membrane **38** in response to the application of a first current **I₁** between the positive battery lead **50** and the negative battery lead **34** that is greater than a predetermined maximum current **I_{MAX}.**

A maximum charging power **P_{MAX}** is defined as the first voltage **V₁** times the first current **I₁,** with either the first voltage **V₁** being greater than the predetermined maximum voltage **V_{MAX}** or the first current **I₁** being greater than the predetermined maximum current **I_{MAX}.**

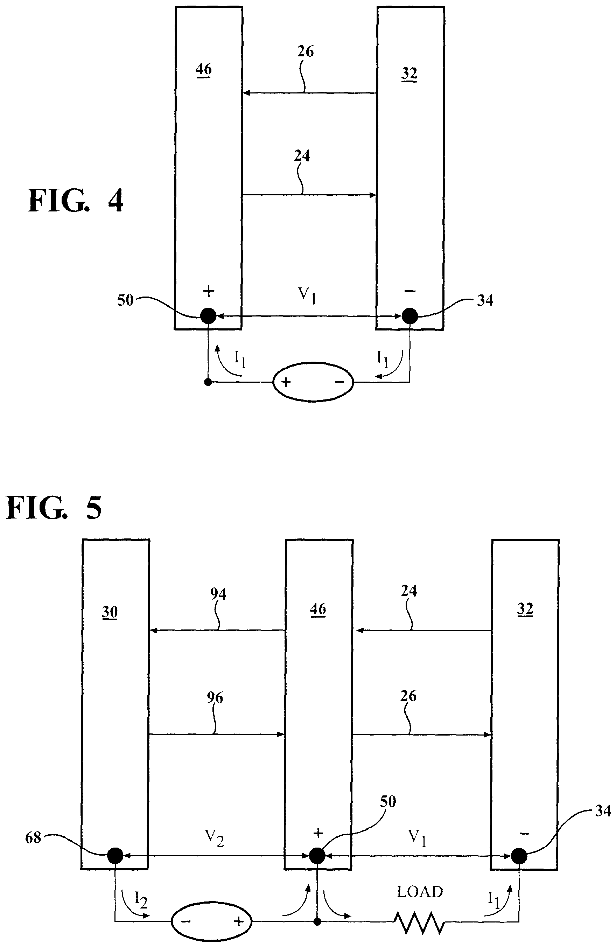

A secondary battery may be charged with a power less than the maximum charging power **P_{MAX}** and applied over a first time interval **T₁** as is the case with the traditional means of charging a secondary battery **22,** shown schematically in Figure 4. Application of power in excess of the maximum charging power **P_{MAX},** between the between the positive battery lead **50** and the negative battery lead **34** can cause irreversible damage to the first electrolyte **44** and/or the membrane **38** and/or either of the electrodes **32, 46,** which substantially reduces the capacity of the secondary battery **22.**

The first electrolyte **44** consists essentially of glycerol and first ions **24** containing Aluminum and having a positive charge, and second ions **26** containing Aluminum and having a negative charge. The first ions **24** include [Al(ClO₄)₂ • {C₃H₅(OH)₃}₂]⁺, and the second ions **26** include [Al(ClO₄)₄]⁻. The first ions **24** and the second ions **26** migrate between and react with the anode layer **32** and the cathode layer **46** to charge and discharge the secondary battery **22.**

A fast charge composite **60** overlies and contacts one of the electrodes **32, 46** of the secondary battery **22.** The fast charge composite **60** has a third rectangular border with a third length and a third width that are between those of the first rectangular border of the anode layer **32** and the second rectangular border of the cathode layer **46.**

The fast charge composite **60** includes a separator **62** of cellulose that is impregnated with a second electrolyte **64** that includes third ions **94** containing Aluminum and having a positive charge. The second electrolyte **64** also includes fourth ions **96** containing Aluminum and having a negative charge. The separator **62** is disposed parallel to and contacting one of the electrodes **32, 46,** which is designated as the adjacent electrode **32, 46.** The other one of the electrodes **32, 46** that is not in contact with the separator **62** is designated as the remote electrode **32, 46** and is electrically isolated from the fast charge layer **30.** The separator **62** is an electrical insulator, but is permeable to dissolved ions.

The fast charge composite **60** also includes a fast charge layer **30** comprising foil **66** of thermally expanded graphite which is disposed adjacent and parallel to the separator **62** so that the separator **62** is sandwiched between the adjacent electrode **32, 46** and the fast charge layer **30.** A fast charge lead **68** of electrically conductive material is electrically connected to the fast charge layer **30** for the application of second electrical power **P_{FC},** which is greater than the maximum charging power **P_{MAX}** which can be applied between the battery leads **34, 50.**

The second electrical power **P_{FC}** is a function of a second voltage **V₂** between the fast charge lead **68** and the battery lead **34, 50** of the adjacent electrode **32, 46** times a second current **I₂** that flows through an external circuit between the fast charge lead **68** and the battery lead **34, 50** of the adjacent electrode **32, 46** and applied over a second time interval **T₂.**

The second electrical power **P_{FC}** causes the third ions **94** and the fourth ions **96** to migrate through the separator **62** between the adjacent electrode **32, 46** and the fast charge layer **30** to change the electrochemical potential of the adjacent electrode **32, 46** and to cause the secondary battery **22** to store the predetermined amount of electrical energy in a shorter second time interval **T₂** than the first time interval **T₁** when subjected at or below the maximum charging power **P_{MAX}** by traditional charging means. In other words, it is possible to charge the secondary battery **22** using the fast charge composite **60** in less time than is possible through traditional charging by applying a first voltage **V₁** and a first current **I₁** between the battery leads **34, 50.** Figure 5 is a schematic representation of the application of the second electrical power **P_{FC}** to the fast charge layer **30** by application of the second voltage **V₂** and the second current **I₂.** Figure 5 also shows the secondary battery **22** transferring power into a resistive load connected between the battery leads **34, 50** at the same time as the secondary battery **22** is being charged using the fast charge composite **60.**

The adjacent electrode **32, 46** must be permeable to the third ions **94** and the fourth ions **96.** More specifically, a sufficient number of the third ions **94** and the fourth ions **96** must be able to penetrate within the adjacent electrode **32, 46** in response to the application of the second voltage **V₂,** to cause a sufficient change in the electrochemical potential of the adjacent electrode **32, 46** that enables the secondary battery **22** to store the predetermined amount of electrical energy. A cathode layer **46** that contains a host lattice **54** having a conjugated system with delocalized *π* electrons may be used as the adjacent electrode **32, 46.** Alternatively, an anode layer **32** may be used as the adjacent electrode **32, 46.** Such an anode layer **32** may be formed, for example, as an open-cell foam or a solid of particles **92** or granules bound together.

Because of the electrical isolation between the remote electrode **32, 46** and the fast charge composite **60,** the second voltage **V₂** can be different than the first voltage **V₁.** This means that it is possible to apply a second voltage **V₂** that is in excess of the maximum voltage **V_{MAX},** which would cause damage to the first electrolyte **44** and/or the membrane **38** and/or either of the electrodes **32, 46** if it were to be applied between the electrodes **32, 46.**

In one embodiment, the adjacent electrode **32, 46** is the cathode layer **46,** and the remote electrode **32, 46** is the anode layer **32,** and each of which is electrically isolated from the fast charge layer **30.**

In a second, alternative embodiment, the adjacent electrode **32, 46** is the anode layer **32** and the remote electrode **32, 46** is the cathode layer **46,** and each of which is electrically isolated from the fast charge layer **30.**

The present invention also provides a method for constructing a fast charge composite **60** combined with a secondary battery **22.**

The method includes the steps of: stacking a separator **62** of electrically insulating material upon and parallel to either the anode layer **32** or the cathode layer **46** rendering it the adjacent electrode **32, 46,** stacking a fast charge layer **30** of thermally expanded graphite foil **66** upon and parallel to the separator **62** so the separator **62** is disposed between the and the fast charge layer **30,** and attaching a fast charge lead **68** in electrical contact with the fast charge layer **30** with a conductive adhesive **52** of graphite paint.

The method includes steps for producing a second electrolyte **64,** including: dissolving AlCl₃ powder in ethanol to saturation to create a background solution **78,** combining 40 wt% of the background solution **78** with 60 wt% of glycerol to make a binary solvent **80,** grating 1 cm³ of 99.4 to 99.9 wt% of Aluminum of 99.95 % purity and 0.1 to 0.6 wt% of Indium to make filings **82** with an equivalent surface area of 20 to 30 cm², immersing the filings **82** in 150 to 200 ml of the binary solvent **80** until the filings **82** have dissolved to produce a second electrolyte **64** that includes third ions **94** that contain Aluminum and have a positive charge and fourth ions **96** that contain Aluminum and have a negative charge.

The method concludes with the step of wetting the separator **62** with the second electrolyte **64.**

Obviously, many modifications and variations of the present invention are possible in light of the above teachings and may be practiced otherwise than as specifically described while within the scope of the appended claims. That which is prior art in the claims precedes the novelty set forth in the "characterized by" clause. The novelty is meant to be particularly and distinctly recited in the "characterized by" clause whereas the antecedent recitations merely set forth the old and well-known combination in which the invention resides. These antecedent recitations should be interpreted to cover any combination in which the inventive novelty exercises its utility. The use of the word "said" in the apparatus claims refers to an antecedent that is a positive recitation meant to be included in the coverage of the claims whereas the word "the" precedes a word not meant to be included in the coverage of the claims. In addition, the reference numerals in the claims are merely for convenience and are not to be read in any way as limiting.

## Claims

1. A fast charge system **(20)** including a secondary battery **(22)** having a capacity to store a predetermined amount of electrical energy, said fast charge system **(20)** comprising;
a pair of electrodes **(32, 46)** including an anode layer **(32)** and a cathode layer **(46)** extending in parallel and spaced relationship to one another,
a membrane **(38)** sandwiched between said anode layer **(32)** and said cathode layer **(46),**
a first electrolyte **(44)** including first ions **(24)** and impregnating said membrane **(38)** to carry an excess ion migration through said membrane **(38)** in response to the application of a maximum charging power **(P_{MAX})** as a function of a first voltage **(V₁)** between said anode layer **(32)** and said cathode layer **(46)** times a first current **(I₁)** therebetween and applied over a first time interval **(T₁),**
a fast charge composite **(60)** including a separator **(62)** impregnated with a second electrolyte **(64)** including third ions **(94)** having a positive charge and including fourth ions **(96)** having a negative charge and disposed adjacent to and contacting one of said electrodes **(32, 46)** rendering it an adjacent electrode **(32, 46)** and the remaining one of said electrodes **(32, 46)** being rendered a remote electrode **(32, 46)** electrically isolated from said fast charge composite **(60),**
said adjacent electrode **(32, 46)** being permeable to said third ions **(94)** and said fourth ions **(96)** for allowing said third ions **(94)** and said fourth ions **(96)** to penetrate within said adjacent electrode **(32, 46),**
said fast charge composite **(60)** including a fast charge layer **(30)** disposed adjacent and parallel to said separator **(62)** with said separator **(62)** sandwiched between said adjacent electrode **(32, 46)** and said fast charge layer **(30)** to electrically insulate said fast charge layer **(30)** from said adjacent electrode **(32, 46)** and for exchanging said third ions **(94)** and said fourth ions **(96)** through said separator **(62)** with said adjacent electrode **(32, 46),**
said fast charge composite **(60)** including a fast charge lead **(68)** of electrically conductive material electrically connected to said fast charge layer **(30)** for the application of a second electrical power **(P_{FC})** greater than said maximum charging power **(P_{MAX})** and a function of a second voltage **(V₂)** between said fast charge lead **(68)** and said battery lead **(34, 50)** of said adjacent electrode **(32, 46)** times a second current **(I₂)** therebetween and applied over a second time interval **(T₂)** to cause said third ions **(94)** and said fourth ions **(96)** to migrate between said adjacent electrode **(32, 46)** and said fast charge layer **(30)** to change the electrochemical potential of said adjacent electrode **(32, 46)** to enable said secondary battery **(22)** to store said predetermined amount of electrical energy in less said second time interval **(T₂)** than said first time interval **(T₁)** when subjected at and below said maximum charging power **(P_{MAX}),** and
at least one of said first ions **(24)** and said third ions **(94)** and said fourth ions **(96)** containing Aluminum.

2. A fast charge system **(20)** as set forth in claim 1 wherein said adjacent electrode **(32, 46)** is said cathode layer **(46).**

3. A fast charge system **(20)** as set forth in claim 1 wherein said adjacent electrode **(32, 46)** is said anode layer **(32).**

4. A fast charge system **(20)** as set forth in claim 1 wherein said fast charge layer **(30)** comprises thermally expanded graphite.

5. A fast charge system **(20)** as set forth in claim 1 further including,
said anode layer **(32)** consisting of 99.4 to 99.9 wt% of solid Aluminum of 99.95 % purity and 0.1 to 0.6 wt% of Indium and having first rectangular borders defining a first length of 1.2 cm and a first width of 1.7 cm and a first thickness of 0.1 mm,
a negative battery lead **(34)** of an electrically conductive material in electrical contact with said anode layer **(32)** for conducting electrical current with external circuitry,
a cement **(36)** including particles **(92)** containing metal and disposed between said anode layer **(32)** and said negative battery lead **(34)** for attaching said anode layer **(32)** to said negative battery lead **(34)** and for conducting electrical current therebetween,
said cathode layer **(46)** having second rectangular borders defining a second length of 1.4 cm and a second width of 1.9 cm and a second thickness of 0.1 mm,
said cathode layer **(46)** including a carrier sheet **(48)** of cellulose and an electroactive layer **(28)** integrated with and upon said carrier sheet **(48)** facing said anode layer **(32),**
a positive battery lead **(50)** containing thermally expanded graphite in electrical contact with said electroactive layer **(28)** of said cathode layer **(46)** for conducting electrical current with external circuitry,
an adhesive **(52)** containing graphite disposed between said electroactive layer **(28)** and said positive battery lead **(50)** for attaching said electroactive layer **(28)** to said positive battery lead **(50)** and for conducting electrical current therebetween,
said membrane **(38)** being of cellulose having a third thickness **(40)** of 0.08 mm and defining a plurality of pores **(42)** and sandwiched between said anode layer **(32)** and said cathode layer **(46)** for providing electrical insulation and to define a first voltage **(V₁)** therebetween,
said first ions **(24)** containing Aluminum and having a positive charge,
said first electrolyte **(44)** further including second ions **(26)** containing Aluminum and having a negative charge, and
said first electrolyte impregnating said pores **(42)** of said membrane **(38)** to carry an excess ion migration through said membrane **(38)** in response to the application of a first current **(I₁)** between said positive battery lead **(50)** and said negative battery lead **(34)** greater than a predetermined maximum current **(I_{MAX})** and to define a maximum charging power **(P_{MAX})** as said first voltage **(V₁)** times said first current **(I₁)** with one of said first voltage **(V₁)** in excess of a predetermined maximum voltage **(V_{MAX})** and said first current **(I₁)** in excess of said maximum current **(I_{MAX})** and applied over a first time interval **(T₁)** to damage said secondary battery **(22),**
said first electrolyte **(44)** consisting essentially of glycerol and said first ions **(24)** containing Aluminum including [Al(ClO₄)₂ • {C₃H₅(OH)₃}₂]⁺ and said second ions **(26)** containing Aluminum including [Al(ClO₄)₄]⁻ for migrating between and reacting with said anode layer **(32)** and said cathode layer **(46)** to charge and discharge said secondary battery **(22),**
said electroactive layer **(28)** of said cathode layer **(46)** containing a host lattice **(54)** having a conjugated system with delocalized *π* electrons and defining voids **(56)** and a dopant **(58)** containing Aluminum Alcoholate and Aluminum Glycerate bonded with said conjugated system of said host lattice **(54)** and intercalated in said voids **(56)** to alter the electrochemical properties of said electroactive layer **(28)** of said cathode layer **(46)** to increase the rate of the reactions with said first ions **(24)** and said second ions **(26)** for charging and discharging said secondary battery **(22),**
said fast charge composite **(60)** having third rectangular borders between said first and said second rectangular borders and said separator **(62)** being of cellulose for providing electrical insulation,
said third ions **(94)** containing Aluminum and said fourth ions **(96)** containing Aluminum,
said fast charge composite **(60)** being disposed parallel to one of said electrodes **(32, 46),**
said adjacent electrode **(32, 46)** being permeable to said third ions **(94)** and said fourth ions **(96)** for absorbing and reacting with said third ions **(94)** and said fourth ions **(96)** within said adjacent electrode **(32, 46),**
said fast charge layer **(30)** comprising foil **(66)** of thermally expanded graphite disposed adjacent and parallel to said separator **(62).**

6. A fast charge system **(20)** as set forth in claim 6 wherein said particles **(92)** containing metal of said cement **(36)** include Silver.

7. A fast charge system **(20)** as set forth in claim 6 wherein said particles **(92)** containing metal of said cement **(36)** include Aluminum.

8. A method for constructing a fast charge composite **(60)** combined with a secondary battery **(22)** having an anode layer **(32)** and a cathode layer **(46),** said method comprising;
stacking a separator **(62)** of electrically insulating material upon and parallel to one of said anode layer **(32)** and said cathode layer **(46)** rendering it an adjacent electrode **(32, 46),**
stacking a fast charge layer **(30)** upon and parallel to the separator **(62)** with the separator **(62)** disposed between said adjacent electrode **(32, 46)** and said fast charge layer **(30),**
and **characterized by**,
dissolving AlCl₃ in ethanol to create a background solution **(78),**
combining the background solution **(78)** with glycerol to produce a second electrolyte **(64)** including third ions **(94)** having a positive charge and including fourth ions **(96)** having a negative charge,
wetting the separator **(62)** with the second electrolyte **(64).**

9. A method as set forth in claim 8 further including,
the fast charge layer **(30)** being of thermally expanded graphite,
attaching a fast charge lead **(68)** in electrical contact with the fast charge layer **(30)** with an adhesive **(52)** of graphite paint,
said AlCl₃ being a powder and dissolving said AlCl₃ powder in ethanol to saturation to create the background solution **(78),**
combining 40 wt% of the background solution **(78)** with 60 wt% of glycerol to make a binary solvent **(80),**
grating 1 cm³ of 99.4 to 99.9 wt% of Aluminum of 99.95 % purity and 0.1 to 0.6 wt% of Indium to make filings **(82)** with an equivalent surface area of 20 to 30 cm²,
producing the second electrolyte **(64)** by immersing the filings **(82)** in 150 to 200 ml of the binary solvent **(80)** until the filings **(82)** have dissolved,
the third ions **(94)** containing Aluminum and the fourth ions **(96)** containing Aluminum.

## Patentansprüche

1. Schnellladesystem (20), das eine Sekundärbatterie (22) mit einer Kapazität zum Speichern einer vorbestimmten Menge elektrischer Energie aufweist, wobei das Schnellladesystem (20) folgendes umfasst:
in Elektrodenpaar (32, 46) mit einer Anodenschicht (32) und einer Kathodenschicht (46), die sich parallel und mit Abstand zueinander erstrecken;
eine Membran (38), die sich zwischen der Anodenschicht (32) und der Kathodenschicht (46) befindet;
einen ersten Elektrolyt (44), der erste Ionen (24) aufweist und die Membran (38) imprägniert, so dass diese eine überschüssige lonenmigration durch die Membran (38) als Reaktion auf die Anwendung einer maximalen Ladeleistung (P_{MAX}) als eine Funktion einer ersten Spannung (V₁) zwischen der Anodenschicht (32) und der Kathodenschicht (46) multipliziert mit einem dazwischen liegenden ersten Strom (I₁) und angelegt über ein erstes Zeitintervall (T₁) trägt;
einen Schnellladeverbundstoff (60) mit einem Separator (62), der imprägniert ist mit einem zweiten Elektrolyt (64) mit dritten Ionen (94) mit einer positiven Ladung und mit vierten Ionen (96) mit einer negativen Ladung, und angeordnet angrenzend an und in Kontakt mit einer der Elektroden (32, 46), so dass diese zu einer Nachbarelektrode (32, 46) wird, und wobei die verbleibende Elektrode der Elektroden (32, 46) zu einer entfernten Elektrode (32, 46) wird, die von dem Schnellladeverbundstoff (60) elektrisch isoliert ist;
wobei die Nachbarelektrode (32, 46) durchlässig ist für die dritten Ionen (94) und die vierten Ionen (96), so dass die dritten Ionen (94) und die vierten Ionen (96) in die Nachbarelektrode (32, 46) eindringen können;
wobei der Schnellladeverbundstoff (60) eine Schnellladeschicht (30) aufweist, die angrenzend an und parallel zu dem Separator (62) angeordnet ist, wobei sich der Separator (62) zwischen der Nachbarelektrode (32, 46) und der Schnellladeschicht (30) befindet, um die Schnellladeschicht (30) von der Nachbarelektrode (32, 46) elektrisch zu isolieren, und um die dritten Ionen (94) und die vierten Ionen (96) mit der Nachbarelektrode (32, 46) durch den Separator (62) auszutauschen;
wobei der Schnellladeverbundstoff (60) eine Schnellladeleitung (68) aus einem elektrisch leitfähigen Material aufweist, das mit der Schnellladeschicht (30) elektrisch verbunden ist, um eine zweite elektrische Leistung (P_{FC}), die größer ist als die maximale Ladeleistung (P_{MAX}) anzulegen, und mit einer Funktion einer zweiten Spannung (V₂) zwischen der Schnellladeleitung (68) und der Batterieleitung (34, 50) der Nachbarelektrode (32, 46) multipliziert mit einem dazwischen liegenden zweiten Strom (I₂) und angelegt über ein zweites Zeitintervall (T₂), um zu bewirken, dass die dritten Ionen (94) und die vierten Ionen (96) zwischen die Nachbarelektrode (32, 46) und die Schnellladeschicht (30) migrieren, um das elektrochemische Potenzial der Nachbarelektrode (32, 46) zu verändern, um es zu ermöglichen, dass die Sekundärbatterie (22) die vorbestimmte Menge elektrischer Energie weniger als dem zweiten Zeitintervall (T₂) als dem ersten Zeitintervall (T₁) speichert, wenn sie einer Leistung in Höhe der maximalen Ladeleistung (P_{MAX}) oder niedriger ausgesetzt wird; und
wobei wenigstens die ersten Ionen (24), die dritten Ionen (94) oder die vierten Ionen (96) Aluminium enthalten.

2. Schnellladesystem (20) nach Anspruch 1, wobei die Nachbarelektrode (32, 46) die Kathodenschicht (46) ist.

3. Schnellladesystem (20) nach Anspruch 1, wobei die Nachbarelektrode (32, 46) die Anodenschicht (32) ist.

4. Schnellladesystem (20) nach Anspruch 1, wobei die Schnellladeschicht (30) thermisch expandierten Graphit umfasst.

5. Schnellladesystem (20) nach Anspruch 1, wobei dieses ferner folgendes aufweist:
die Anodenschicht (32), die zu 99,4 bis 99,9 Gew.-% aus festem Aluminium mit einer Reinheit von 99,95% besteht und zu 0,1 bis 0,6 Gew-% aus Indium, und wobei sie erste rechtwinklige Begrenzungen aufweist, die eine erste Länge von 1,2 cm und eine erste Breite von 1,7 cm und eine erste Dicke von 0,1 mm definieren;
eine negative Batterieleitung (34) aus einem elektrisch leitfähigen Material in elektrischem Kontakt mit der Anodenschicht (32), um elektrischen Strom mit einer externen Schaltkreisanordnung zu leiten;
einen Zement (36), der Partikel (92) aufweist, die Metall enthalten, und der zwischen der Anodenschicht (32) und der negativen Batterieleitung (34) angeordnet ist, um die Anodenschicht (32) an der negativen Batterieleitung (34) anzubringen, und um elektrischen Strom dazwischen zu leiten;
wobei die Kathodenschicht (46) zweite rechtwinklige Begrenzungen aufweist, die eine zweite Länge von 1,4 cm, eine zweite Breite von 1,9 cm und eine zweite Dicke von 0,1 mm definieren;
wobei die Kathodenschicht (46) eine Trägerbahn (48) aus Zellulose aufweist sowie eine elektroaktive Schicht (28) aufweist, die integral mit der Trägerbahn (48) und auf dieser, die zu der Anodenschicht (32) zeigt, ausgebildet ist;
eine positive Batterieleitung (50), die thermisch expandierten Graphit umfasst in elektrischem Kontakt mit der elektroaktiven Schicht (28) der Kathodenschicht (46) zum Leiten von elektrischem Strom mit externer Schaltkreisanordnung enthält;
ein Adhäsionsmittel (52), das Graphit enthält, das sich zwischen der elektroaktiven Schicht (28) und der positiven Batterieleitung (50) befindet, um die elektroaktive Schicht (28) an der positiven Batterieleitung (50) anzubringen, und um elektrischen Strom dazwischen zu leiten;
wobei die Membran (38) aus Zellulose besteht und eine dritte Dicke (40) von 0,08 mm aufweist und eine Mehrzahl von Poren (42) definiert und sich zwischen der Anodenschicht (32) und der Kathodenschicht (46) befindet, um eine elektrische Isolierung bereitzustellen und eine erste Spannung (V₁) dazwischen definieren;
wobei die ersten Ionen (24) Aluminium enthalten und eine positive Ladung aufweisen;
wobei der erste Elektrolyt (44) ferner zweite Ionen (26) aufweist, die Aluminium enthalten und eine negative Ladung aufweisen; und
wobei der erste Elektrolyt die Poren (42) der Membran (38) imprägniert, so dass überschüssige lonenmigration durch die Membran (38) als Reaktion auf das Anlegen eines ersten Stroms (I₁) zwischen der positiven Batterieleitung (50) und der negativen Batterieleitung (34) oberhalb eines vorbestimmten maximalen Stroms (I_{MAX}) getragen wird, und um eine maximale Ladeleistung (P_{MAX}) zu definieren als die erste Spannung (V₁) multipliziert mit dem ersten Strom (I₁) mit der ersten Spannung (V₁) oberhalb einer vorbestimmten maximalen Spannung (V_{MAX}) oder dem ersten Strom (I₁) oberhalb des maximalen Stroms (I_{MAX}) und angelegt über ein erstes Zeitintervall (T₁), um die Sekundärbatterie (22) zu beschädigen;
wobei der erste Elektrolyt (44) im Wesentlichen aus Glycerol besteht, und wobei die ersten Ionen (24), die Aluminium enthalten, [Al(ClO₄)₂ • {C₃H₅(OH)₃}₂]⁺ aufweisen, und wobei die zweiten Ionen (26), die Aluminium enthalten, [Al(ClO₄)₄]⁻ aufweisen, für eine Migration zwischen und zur Reaktion mit der Anodenschicht (32) und der Kathodenschicht (46), um die Sekundärbatterie (22) zu laden und zu entladen;
wobei die elektroaktive Schicht (28) der Kathodenschicht (46) ein Wirtsgitter (54) mit einem konjugierten System mit delokalisierten *π* Elektroden enthält und Lücken (56) dotiert, und einen Dotierstoff (58), der Aluminiumalkoholat und Aluminiumglycerat enthält, das mit dem konjugierten System des Wirtsgitters (54) verbunden und in die Lücken (56) eingelagert ist, um die elektrochemischen Eigenschaften der elektroaktiven Schicht (28) der Kathodenschicht (46) zu verändern, um die Rate der Reaktionen mit den ersten Ionen (24) und den zweiten Ionen (26) zum Laden und Entladen der Sekundärbatterie (22) zu erhöhen;
wobei der Schnellladeverbundstoff (60) dritte rechtwinklige Begrenzungen zwischen den ersten und zweiten rechtwinkligen Begrenzungen aufweist, und wobei der Separator (62) aus Zellulose besteht, um elektrische Isolierung bereitzustellen;
wobei die dritten Ionen (94) Aluminium enthalten, und wobei die vierten Ionen (96) Aluminium enthalten;
wobei der Schnellladeverbundstoff (60) parallel zu einer der Elektroden (32, 46) angeordnet ist;
wobei die Nachbarelektrode (32, 46) durchlässig ist für die dritten Ionen (94) und die vierten Ionen (96), um die dritten Ionen (94) und die vierten Ionen (96) in der Nachbarelektrode (32, 46) zu absorbieren und um mit diesen zu reagieren;
wobei die Schnellladeschicht (30) eine Folie (66) aus thermisch expandiertem Graphit umfasst, die neben und parallel zu dem Separator (62) angeordnet ist.

6. Schnellladesystem (20) nach Anspruch 6, wobei die Partikel (92), die Metall des Zements (36) enthalten, Silber aufweisen.

7. Schnellladesystem (20) nach Anspruch 6, wobei die Partikel (92), die Metall des Zements (36) enthalten, Aluminium aufweisen.

8. Verfahren zur Gestaltung eines Schnellladeverbundstoffs (60) in Kombination mit einer Sekundärbatterie (22) mit einer Anodenschicht (32) und einer Kathodenschicht (46), wobei das Verfahren folgendes umfasst:
Stapeln eines Separators (62) aus elektrisch isolierendem Material auf und parallel zu der Anodenschicht (32) und der Kathodenschicht (46), wodurch diese zu einer Nachbarelektrode (32, 46) gemacht wird;
Stapeln einer Schnellladeschicht (30) auf und parallel zu dem Separator (62), wobei sich der Separator (62) zwischen der Nachbarelektrode (32, 46) und der Schnellladeschicht (30) befindet;
und **gekennzeichnet durch**:
Auflösen von AlCl₃ in Ethanol, um eine Grundlösung (78) zu erzeugen;
Kombinieren der Grundlösung (78) mit Glycerol, um einen zweiten Elektrolyt (64) zu erzeugen, der dritte Ionen (94) mit einer vierten Ladung aufweist und vierte Ionen (96) mit einer negativen Ladung;
Benetzen des Separators (62) mit dem zweiten Elektrolyt (64).

9. Verfahren nach Anspruch 8, wobei dieses ferner folgendes aufweist:
die Schnellladeschicht (30), die aus thermisch expandiertem Graphit besteht;
Anbringen einer Schnellladeleitung (68) in elektrischem Kontakt mit der Schnellladeschicht (30) mit Hilfe eines Adhäsionsmittels (52) aus Graphitanstrich;
wobei das AlCl₃ ein Pulver ist, und wobei das AlCl₃-Pulver in Ethanol aufgelöst wird, um die Grundlösung (78) zu erzeugen;
Kombinieren von 40 Gew.-% der Grundlösung (78) mit 60 Gew.-% Glycerol, um ein binäres Lösungsmittel (80) zu erzeugen;
Zerreiben von 1 cm³ aus 99,4 bis 99,9 Gew.-% Aluminium mit einer Reinheit von 99,95% und 0,1 bis 0,6 Gew.-% Indium, um Feilspäne (82) mit einer äquivalenten Oberfläche von 20 bis 30 cm² zu erzeugen;
Erzeugen des zweiten Elektrolyts (64) durch Tauchen der Feilspäne (82) in 150 bis 200 ml des binären Lösungsmittels (80), bis sich die Feilspäne (82) aufgelöst haben;
wobei die dritten Ionen (94) Aluminium enthalten, und wobei die vierten Ionen (96) Aluminium enthalten.

## Revendications

1. Système de charge rapide (20) comprenant une batterie secondaire (22) ayant la capacité de stocker une quantité prédéfinie d'énergie électrique, ledit système de charge rapide (20) comprenant ;
une paire d'électrodes (32, 46) comprenant une couche d'anode (32) et une couche de cathode (46) s'étendant en relation parallèle et espacée l'une de l'autre,
une membrane (38) prise en sandwich entre ladite couche d'anode (32) et ladite couche de cathode (46),
un premier électrolyte (44) comprenant des premiers ions (24) et imprégnant ladite membrane (38) pour supporter une migration d'ions en excès à travers ladite membrane (38) en réponse à l'application d'une puissance de charge maximale (P_{MAX}) comme une fonction d'une première tension (V₁) entre ladite couche d'anode (32) et ladite couche de cathode (46) multipliée par un premier courant (I₁) entre elles et appliquée pendant un premier intervalle de temps (T₁),
un composite de charge rapide (60) comprenant un séparateur (62) imprégné d'un second électrolyte (64) comprenant des troisièmes ions (94) ayant une charge positive et comprenant des quatrièmes ions (96) ayant une charge négative et disposés à côté de et en contact avec l'une desdites électrodes (32, 46), ce qui en fait une électrode (32, 46) adjacente et le reste desdites électrodes (32, 46) devenant une électrode (32, 46) à distance électriquement isolée dudit composite de charge rapide (60),
ladite électrode (32, 46) adjacente étant perméable auxdits troisièmes ions (94) et quatrièmes ions (96) pour permettre auxdits troisièmes ions (94) et quatrièmes ions (96) de pénétrer dans ladite électrode (32, 46) adjacente,
ledit composite de charge rapide (60) comprenant une couche de charge rapide (30) disposée adjacente et parallèle audit séparateur (62), ledit séparateur (62) étant pris en sandwich entre ladite électrode (32, 46) adjacente et ladite couche de charge rapide (30) pour isoler électriquement ladite couche de charge rapide (30) de ladite électrode (32, 46) adjacente et pour échanger lesdits troisièmes ions (94) et quatrièmes ions (96) à travers ledit séparateur (62) avec ladite électrode (32, 46) adjacente,
ledit composite de charge rapide (60) comprenant un conducteur de charge rapide (68) en matériau électriquement conducteur connecté électriquement à ladite couche de charge rapide (30) pour l'application d'une seconde puissance électrique (P_{FC}) supérieure à ladite puissance de charge maximale (P_{MAX}) et une fonction d'une seconde tension (V₂) entre ledit conducteur de charge rapide (68) et ledit conducteur de batterie (34, 50) de ladite électrode (32, 46) adjacente multipliée par un second courant (I₂) entre eux et appliquée pendant un second intervalle de temps (T₂) pour amener lesdits troisièmes ions (94) et lesdits quatrièmes ions (96) à migrer entre ladite électrode (32, 46) adjacente et ladite couche de charge rapide (30) pour modifier le potentiel électrochimique de ladite électrode (32, 46) adjacente pour permettre à ladite batterie secondaire (22) de stocker ladite quantité prédéfinie d'énergie électrique dans moins dudit second intervalle de temps (T₂) que dudit premier intervalle de temps (T₁) lorsqu'elle est soumise à une puissance égale ou inférieure à la puissance de charge maximale (P_{MAX}), et
au moins l'un desdits premiers ions (24) et desdits troisièmes ions (94) et desdits quatrièmes ions (96) contenant de l'aluminium.

2. Système de charge rapide (20) selon la revendication 1, ladite électrode (32, 46) adjacente étant ladite couche de cathode (46).

3. Système de charge rapide (20) selon la revendication 1, ladite électrode (32, 46) adjacente étant ladite couche d'anode (32).

4. Système de charge rapide (20) selon la revendication 1, ladite couche de charge rapide (30) comprenant du graphite expansé thermiquement.

5. Système de charge rapide (20) selon la revendication 1, comprenant en outre,
ladite couche d'anode (32) constituée de 99,4 à 99,9 % en poids d'aluminium solide d'une pureté de 99,95 % et de 0,1 à 0,6 % en poids d'indium et ayant des premiers bords rectangulaires définissant une première longueur de 1,2 cm et une première largeur de 1,7 cm et une première épaisseur de 0,1 mm,
un conducteur de batterie négatif (34) en un matériau électriquement conducteur en contact électrique avec ladite couche d'anode (32) pour conduire un courant électrique avec un circuit externe,
un ciment (36) comprenant des particules (92) contenant du métal et disposé entre ladite couche d'anode (32) et ledit conducteur de batterie négatif (34) pour fixer ladite couche d'anode (32) sur ledit conducteur de batterie négatif (34) et pour conduire le courant électrique entre eux,
ladite couche de cathode (46) ayant des deuxièmes bords rectangulaires définissant une seconde longueur de 1,4 cm et une seconde largeur de 1,9 cm et une seconde épaisseur de 0,1 mm,
ladite couche de cathode (46) comprenant une feuille de support (48) de cellulose et une couche électroactive (28) intégrée avec et sur ladite feuille de support (48) faisant face à ladite couche d'anode (32),
un conducteur de batterie positif (50) contenant du graphite expansé thermiquement en contact électrique avec ladite couche électroactive (28) de ladite couche de cathode (46) pour conduire le courant électrique avec un circuit externe,
un adhésif (52) contenant du graphite disposé entre ladite couche électroactive (28) et ledit conducteur de batterie positif (50) pour fixer ladite couche électroactive (28) audit conducteur de batterie positif (50) et pour conduire le courant électrique entre eux,
ladite membrane (38) étant en cellulose ayant une troisième épaisseur (40) de 0,08 mm et définissant une pluralité de pores (42) et prise en sandwich entre ladite couche d'anode (32) et ladite couche de cathode (46) pour fournir une isolation électrique et pour définir une première tension (V₁) entre elles,
lesdits premiers ions (24) contenant de l'aluminium et ayant une charge positive, ledit premier électrolyte (44) comprenant en outre des deuxièmes ions (26) contenant de l'aluminium et ayant une charge négative, et
ledit premier électrolyte imprégnant lesdits pores (42) de ladite membrane (38) pour supporter une migration d'ions en excès à travers ladite membrane (38) en réponse à l'application d'un premier courant (I₁) entre ledit conducteur de batterie positif (50) et ledit conducteur de batterie négatif (34) supérieur à un courant maximal prédéfini (I_{MAX}) et définir une puissance de charge maximale (P_{MAX}) comme ladite première tension (V₁) multipliée par ledit premier courant (I₁) avec l'une de ladite première tension (V₁) dépassant une tension maximale prédéfinie (V_{MAX}) et ledit premier courant (I₁) dépassant ledit courant maximal (I_{MAX}) et appliquée pendant un premier intervalle de temps (T₁) pour endommager ladite batterie secondaire (22),
ledit premier électrolyte (44) consistant essentiellement en glycérol et lesdits premiers ions (24) contenant de l'aluminium comprenant [Al(ClO₄)₂ • {C₃H₅(OH)₃}₂]⁺ et lesdits deuxièmes ions (26) contenant de l'aluminium comprenant [Al(ClO₄)₄]⁻ pour migrer entre et réagir avec ladite couche anode (32) et ladite couche de cathode (46) afin de charger et décharger ladite batterie secondaire (22),
ladite couche électroactive (28) de ladite couche de cathode (46) contenant un réseau hôte (54) ayant un système conjugué avec π électrons délocalisés et définissant des vides (56) et un dopant (58) contenant de l'alcoolate d'aluminium et du glycérate d'aluminium liés audit système conjugué dudit réseau hôte (54) et intercalés dans lesdits vides (56) pour modifier les propriétés électrochimiques de ladite couche électrochimique (28) de ladite couche cathode (46) pour augmenter la vitesse des réactions avec lesdits premiers ions (24) et lesdits deuxièmes ions (26) pour charger et décharger ladite batterie secondaire (22),
ledit composite de charge rapide (60) ayant des troisièmes bords rectangulaires entre lesdits premiers et deuxièmes bords rectangulaires et ledit séparateur (62) étant en cellulose pour fournir une isolation électrique,
lesdits troisièmes ions (94) contenant de l'aluminium et lesdits quatrièmes ions (96) contenant de l'aluminium,
ledit composite de charge rapide (60) étant disposé parallèlement à l'une desdites électrodes (32, 46),
ladite électrode (32, 46) adjacente étant perméable auxdits troisièmes ions (94) et quatrièmes ions (96) pour absorber et réagir avec lesdits troisièmes ions (94) et quatrièmes ions (96) dans ladite électrode (32, 46) adjacente,
ladite couche de charge rapide (30) comprenant une feuille (66) de graphite expansé thermiquement disposée adjacente et parallèle audit séparateur (62).

6. Système de charge rapide (20) selon la revendication 6, lesdites particules (92) contenant du métal dudit ciment (36) comprenant de l'argent.

7. Système de charge rapide (20) selon la revendication 6, lesdites particules (92) contenant du métal dudit ciment (36) comprenant de l'aluminium.

8. Procédé de construction d'un composite de charge rapide (60) combiné avec une batterie secondaire (22) ayant une couche d'anode (32) et une couche de cathode (46), ledit procédé comprenant les étapes ;
empilement d'un séparateur (62) de matériau électriquement isolant sur et parallèlement à l'une de ladite couche d'anode (32) et de ladite couche de cathode (46), ce qui en fait une électrode (32, 46) adjacente,
empilement d'une couche de charge rapide (30) sur et parallèlement au séparateur (62) avec le séparateur (62) disposé entre ladite électrode (32, 46) adjacente et ladite couche de charge rapide (30),
et **caractérisé par** les étapes,
dissolution d'AlCl₃ dans l'éthanol pour créer une solution de fond (78),
combinaison de la solution de fond (78) avec du glycérol pour produire un deuxième électrolyte (64) comprenant des troisièmes ions (94) ayant une charge positive et comprenant des quatrièmes ions (96) ayant une charge négative,
mouillage du séparateur (62) avec le deuxième électrolyte (64).

9. Procédé selon la revendication 8, comprenant en outre les étapes,
la couche de charge rapide (30) étant en graphite expansé thermiquement,
fixation d'un fil de charge rapide (68) en contact électrique avec la couche de charge rapide (30) avec un adhésif (52) de peinture graphite,
ledit AlCl₃ étant une poudre et dissolution de ladite poudre d'AlCl₃ dans de l'éthanol à saturation pour créer la solution de fond (78),
combinaison de 40 % en poids de la solution de fond (78) avec 60 % en poids de glycérol pour obtenir un solvant binaire (80),
passage dans une grille de 1 cm³ de 99,4 à 99,9 % en poids d'aluminium d'une pureté de 99,95 % et de 0,1 à 0,6 % en poids d'indium pour faire des limailles (82) avec une surface équivalente de 20 à 30 cm²,
production du deuxième électrolyte (64) par immersion des limailles (82) dans 150 à 200 ml du solvant binaire (80) jusqu'à dissolution des limailles (82),
les troisièmes ions (94) contenant de l'aluminium et les quatrièmes ions (96) contenant de l'aluminium.
